# EUROPÄISCHE PATENTSCHRIFT

(11) **EP 1 070 330 B1**
(45) Veröffentlichungstag und Bekanntmachung des Hinweises auf die Patenterteilung: **02.01.2002**
(21) Anmeldenummer: 99924767.9
(22) Anmeldetag: 01.04.1999
(51) Int. Cl.: H01G 4/228, H01G 2/04

(54) **LEISTUNGSKONDENSATOR**
POWER CAPACITOR
CONDENSATEUR DE PUISSANCE

(30) Priorität: 09.04.1998 DE 19816215
(43) Veröffentlichungstag der Anmeldung: 24.01.2001
(73) Patentinhaber: EPCOS AG, 81541 München (DE)
(72) Erfinder: VETTER, Harald, D-89520 Heidenheim (DE); BERG, Ludwig, D-89522 Heidenheim (DE)
(74) Vertreter: Epping, Wilhelm, Dipl.-Ing.
(86) Internationale Anmeldenummer: DE9901017
(87) Internationale Veröffentlichungsnummer: WO9953509

(56) Entgegenhaltungen:
- EP-A- 0 450 122

## Beschreibung

Die Erfindung betrifft einen Leistungskondensator, der zum Einsatz in Kondensatorbatterien vorgesehen ist, bei denen eine niederinduktive Verschaltung mittels Flachbandleitungen erfolgt.

Ein derartiger Kondensator ist aus der EP 0 450 122 B1 bekannt.

Die Entwicklung von Leistungselektronik-Kondensatoren richtet sich stark an der Systementwicklung der Umrichter und den zur Verfügung stehenden Halbleiterventilen aus. Inzwischen werden IGBT (insulated gate bipolar transistor)-Halbleiter nicht nur im 100 kW-Bereich eingesetzt, sondern es existieren Konzepte zur Darstellung von Hochleistungsumrichtern für die Traktion und Industrie im Bereich bis zu 6 MW. Die Entwicklung konzentriert sich dabei auf Modularität und Standardisierung der Baugruppen. Aus dieser Strategie leitet sich auch die Forderung nach entsprechend optimierten Bauelementen ab.

Die vorhandenen Zwischenkreiskondensatoren haben zwar durch Baugrößenreduzierung und Absenkung der Streuinduktivität beachtliche Erfolge erzielt, die aktuellen Marktforderungen können aber zur Zeit nur suboptimal erfüllt werden.

Aufgabe der vorliegenden Erfindung ist es, einen Leistungskondensator der eingangs genannten Art mit optimal an den Einsatz in IGBT-Invertern angepaßten Eigenschaften bei gleichzeitiger Kostenreduzierung anzugeben.

Diese Aufgabe wird erfindungsgemäß dadurch gelöst, daß die Verschaltung zwischen Kondensator und Bandleitung mittels Steckelementen erfolgt.

Vorteilhafte Ausgestaltungen sind in den Unteransprüchen angeführt.

Die Erfindung wird anhand der folgenden Ausführungsbeispiele näher erläutert.

### In der dazugehörenden Zeichnung zeigen:

- Figur 1: ein Kondensatorgehäuse mit steckbarem Funktionselement,
- Figur 2: eine Draufsicht auf das Gehäuse mit steckbar ausgebildeten Bandleitungen,
- Figuren 3 und 4: Schnittbilder gemäß den in Figur 2 angegebenen Schnittlinien und
- Figur 5: eine vergrößerte Darstellung des steckbaren Funktionselements in Figur 1.

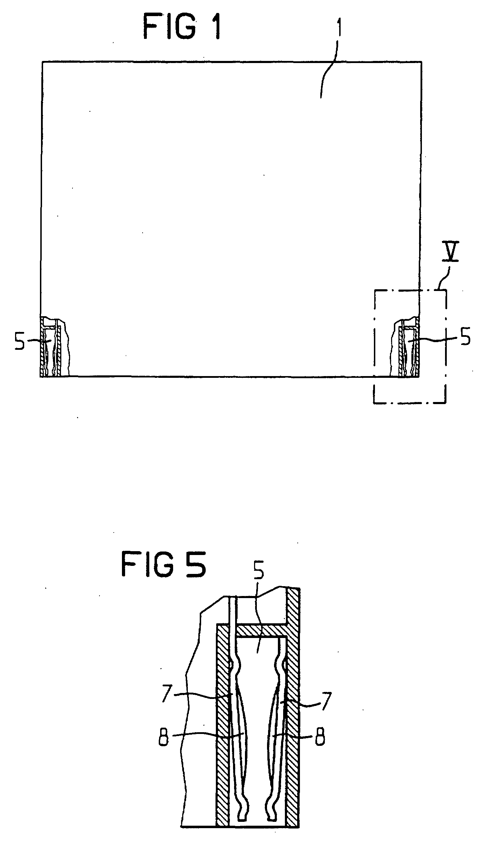

In Figur 1 ist ein Gehäuse 1 dargestellt, in das der Kondensator eingebaut ist. Am Gehäuse sind steckbare Funktionselemente 5 angeordnet, die in der Figur 5 näher erläutert sind.

Das Gehäuse 1 wird später auf einen in der Figur nicht dargestellten IGBT-Inverterbaustein montiert.

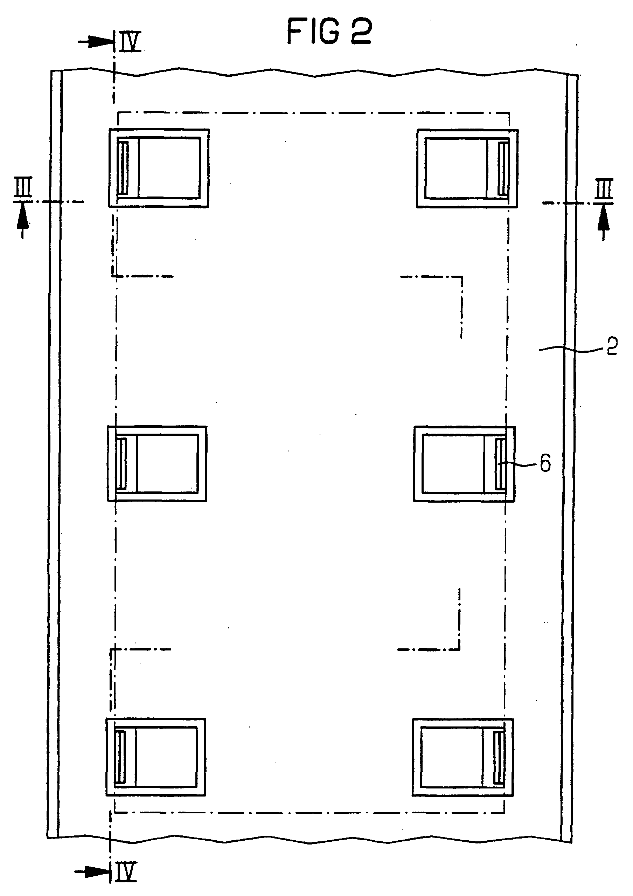

In der Figur 2 ist die Draufsicht auf eine Bandleitung 2 dargestellt, die sich oberhalb des in der Figur strichpunktiert gezeichneten Kondensatorgehäuses 1 befindet.

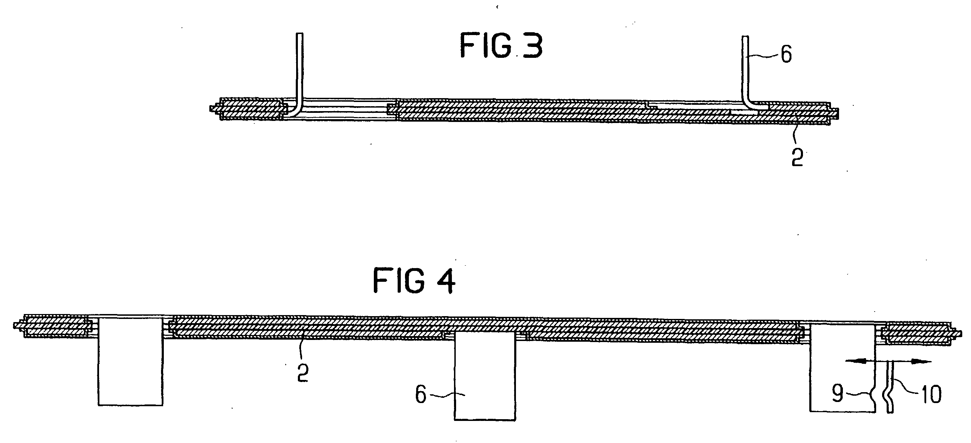

Wie aus den Figuren 3 bzw. 4 hervorgeht, ist die Bandleitung 2 steckbar ausgebildet, wozu das Blechmaterial der Bandleitung 2 in geeigneter Weise ausgestanzt und gebogen (Messerkontakt) wird. Dieser Biegevorgang kann kostengünstig bei der Herstellung der Bandleitung 2 erfolgen, wobei ein zusätzliches Bauteil nicht erforderlich ist. Der Kontakt wird über den gebogenen Blechstreifen 6 bzw. über einen zusätzlich montierten Blechwinkel, in Verbindung mit dem in der Figur 5 dargestellten Gegenstück 7 der steckbaren Funktionseinheit 5 herstellt.

Das Gegenstück ist aus mehreren, federnden Kontaktelementen hergestellt, um den Übergangswiderstand zu minimieren. Das Kondensatorgehäuse 3 kann zusätzlich mit einem oder mehreren Konstruktionselementen mit Rast- oder Schnappfunktion 9, 10 ausgestattet werden und beispielsweise mit einer Hilfsvorrichtung vibrationsfrei auf die Bandleitung 2 montiert werden.

Aus der Figur 5 ist weiterhin ersichtlich, daß das steckbare Funktionselement 5 mit einer Anzahl von federnd ausgebildeten Kontaktpunkten 8 ausgeführt sein kann.

Im Gegensatz zu den in den Figuren dargestellten Ausführungsbeispielen können die Steckelemente auch derart ausgebildet werden, daß das Gegenstück 7 mit den federnden Kontaktelementen 8 nach Figur 5 funktional vergleichbar auf die Bandleitung 2 montiert ist und der Blechstreifen (Messerkontakt 6) in geeigneter Weise am Kondensatorgehäuse 1 angeordnet wird.

Durch die erfindungsgemäße Ausgestaltung mittels Steckelementen lassen sich die Anforderungen an einen IGBT-Zwischenkreis- oder Entkopplungskondensator erfüllen, bei dem vergleichsweise hohe Ströme (10 - 500 A) niedere parasitäre Induktivitäten L_{σKOND} (im Bereich < 80 nH) und erhebliche Impulsströme Iₛ(im Bereich 0,1 - 500 kA) beherrscht werden.

Durch die Verschaltung mehrerer Kondensatoren mittels der Bandleitung 2 wird die Forderung nach einer Kreisinduktivität Lₖᵣₑᵢₛ ≤ 100 nH durch kurze Leitungslängen möglich, wobei gleichzeitig die Anzahl der parallel geschalteten Kondensatoren n_{kond} optimiert werden kann, um den bekannten Effekt Lₖᵣₑᵢₛ ~ (1/n_{kond}) + L_{system} Wirkungsvoll zur Reduzierung der Kreisinduktivität Lₖᵣₑᵢₛ auszunutzen.

Ein weiterer Vorteil bei der erfindungsgemäßen Verschaltung durch Steckelemente liegt darin, daß keine nennenswerten Montagekosten entstehen, so daß bei Berücksichtigung der Montagekosten problemlos die Anzahl der verwendeten Bauelemente den Forderungen nach niederer Kreisinduktivität Lₖᵣₑᵢₛ angepaßt werden und auf die häufig verwendeten Entkopplungskondensatoren mit der aufwendigen Verschaltung in der Regel verzichtet werden kann.

Die Anzahl der Steckelemente wird nach dem Gesichtspunkt der Stromtragfähigkeit (Betriebsstrom z. B. 200 A_{eff}/Kondensator) und der zulässigen parasitären Induktivität L_{σkond} festgelegt, wobei die Anzahl zwei nicht unterschritten wird. Vorzugsweise werden vier bis sechs steckbare Funktionselemente 5 am Kondensatorgehäuse 1 angeordnet.

## Patentansprüche

1. Leistungskondensator, der zum Einsatz in Kondensatorbatterien vorgesehen ist, bei denen eine niederinduktive Verschaltung mittels Flachbandleitungen erfolgt,
**dadurch gekennzeichnet,**
**daß** die Verschaltung zwischen Kondensator und Bandleitung (2) mittels Steckelementen erfolgt.

2. Leistungskondensator nach Anspruch 1,
**dadurch gekennzeichnet,**
**daß** die Anzahl der Steckelemente pro Kondensator ≥2 ist.

3. Leistungskondensator nach Anspruch 2,
**dadurch gekennzeichnet,**
**daß** die Anzahl der Steckelemente pro Kondensator 4 bis 6 beträgt.

4. Leistungskondensator nach einem der Ansprüche 1 bis 3,
**dadurch gekennzeichnet,**
**daß** die Steckelemente als Messerkontakt ausgebildet sind.

5. Leistungskondensator nach Anspruch 4,
**dadurch gekennzeichnet,**
**daß** der Messerkontakt aus einem aus der Bandleitung (2) abgebogenem Blechstreifen (6) besteht, der in ein am Kondensatorgehäuse (1) angeordnetes Gegenstück (5) eingreift.

6. Leistungskondensator nach Anspruch 5,
**dadurch gekennzeichnet,**
**daß** das Gegenstück (5) aus mehreren federnden Kontaktelementen (7, 8) besteht.

7. Leistungskondensator nach einem der Ansprüche 4 bis 6,
**dadurch gekennzeichnet,**
**daß** Blechstreifen (6) und Gegenstück durch eine Rastund/oder Schnappfunktion (9, 10) miteinander verbunden sind.

## Claims

1. Power capacitor, which is intended for use in capacitor banks, in which flat ribbon lines are used for low-inductance interconnections,
**characterized**
**in that** plug-in elements are used for the interconnections between the capacitor and the ribbon line (2).

2. Power capacitor according to Claim 1,
**characterized**
**in that** the number of plug-in elements per capacitor is ≥ 2.

3. Power capacitor according to Claim 2,
**characterized**
**in that** the number of plug-in elements per capacitor is 4 to 6.

4. Power capacitor according to one of Claims 1 to 3,
**characterized**
**in that** the plug-in elements are in the form of blade contacts.

5. Power capacitor according to Claim 4,
**characterized**
**in that** the blade contact comprises a sheet-metal strip (6) which is bent from the ribbon line (2) and engages in a mating piece (5) arranged on the capacitor housing (1).

6. Power capacitor according to Claim 5,
**characterized**
**in that** the mating piece (5) comprises a number of sprung contact elements (7, 8).

7. Power capacitor according to one of Claims 4 to 6,
**characterized**
**in that** the sheet-metal strip (6) and mating piece are connected to one another by means of a latching and/or snap-action function (9, 10).

## Revendications

1. Condensateur de puissance destiné à être utilisé dans des batteries de condensateur dans lesquelles un câblage à faible induction est réalisé au moyen de conducteurs en ruban plat,
**caractérisé**
**en ce que** le câblage entre le condensateur et le conducteur (2) à ruban est réalisé au moyen d'éléments d'enfichage.

2. Condensateur de puissance suivant la revendication 1,
**caractérisé**
**en ce que** le nombre des éléments d'enfichage par condensateur est ≥ 2.

3. Condensateur de puissance suivant la revendication 2,
**caractérisé**
**en ce que** le nombre des éléments d'enfichage par condensateur est de 4 à 6.

4. Condensateur de puissance suivant l'une des revendications 1 à 3,
**caractérisé**
**en ce que** les éléments d'enfichage sont constitués sous la forme de contact à couteau.

5. Condensateur de puissance suivant la revendication 4,
**caractérisé**
**en ce que** le contact à couteau est constitué d'une bande (6) de tôle pliée dans un conducteur (2) à ruban et pénétrant dans une pièce (5) antagoniste prévue sur le boîtier (1) du condensateur.

6. Condensateur de puissance suivant la revendication 5,
**caractérisé**
**en ce que** la pièce (5) antagoniste est constituée de plusieurs éléments (7,8) élastiques de contact.

7. Condensateur de puissance suivant l'une des revendications 4 à 6,
**caractérisé**
**en ce que** les bandes (6) de tôle et la pièce antagoniste sont reliées entre elles par une fonction (9,10) d'encliquetage et/ou de déclic.
